# EUROPÄISCHE PATENTSCHRIFT

(11) **EP 2 781 632 B1**
(45) Veröffentlichungstag und Bekanntmachung des Hinweises auf die Patenterteilung: **21.12.2016**
(21) Anmeldenummer: 14000714.7
(22) Anmeldetag: 28.02.2014
(51) Int. Cl.: D01G 15/24, B24B 19/18

(54) **Vorrichtung zur Bearbeitung von Wanderdeckeln**
Device for processing of revolving flats
Dispositif d'usinage de chapeaux marchants

(30) Priorität: 18.03.2013 CH 6172013
(43) Veröffentlichungstag der Anmeldung: 24.09.2014
(73) Patentinhaber: Maschinenfabrik Rieter AG, 8406 Winterthur (CH)
(72) Erfinder: Schatzmann, Hans-Peter, CH-8524 Uesslingen (CH)

(56) Entgegenhaltungen:
- CN-U- 2 119 285
- DE-C- 634 651
- GB-A- 191 420 443

## Beschreibung

Die Erfindung betrifft eine Vorrichtung sowie ein Verfahren zur Bearbeitung von Laufflächen an Kopfendstücken von Wanderdeckeln und der Prüfung der Linearität von Wanderdeckeln.

In einer Karde bildet der Deckelbereich zusammen mit der Trommel die Hauptkardierzone und hat als Funktion die Auflösung der Flocken zu Einzelfasern, Ausscheidung von Verunreinigungen und Staub, Eliminierung von sehr kurzen Fasern, die Auflösung von Nissen und die Parallelisierung der Fasern. Da die eingesetzten Deckel aufgrund ihrer Funktion durch Schmutz und Fasern zugesetzt werden, ist es notwendig, diese zu reinigen. Daher wurde der Wanderdeckel entwickelt, wobei die Deckel mittels einer Kette oder einem Riemen zusammen gehalten und zu einem endlosen, umlaufenden Band zusammengefasst werden. Während eines Umlaufs der Deckel, auch Deckelreise genannt, steht ein Teil der Deckel immer in direktem Einsatz gegenüber der Trommelgarnitur. Der restliche Teil der Deckel wird über Umlenkrollen in Rückenlage zurück transportiert und kann während dieser Phase gereinigt und eventuell geschliffen werden.

Zwischen den Garnituren der Deckel und der Garnitur der Trommel formt sich ein enger Spalt, der Kardierspalt genannt wird. Er ergibt sich, indem die Wanderdeckel, geführt durch bogenförmige Leisten, sogenannte Flexibelbogen, in einem durch diese Flexibelbogen bestimmten Abstand, in Umfangsrichtung der Trommel entlang geführt werden. Die Grösse des Kardierspalts liegt bei einer Wanderdeckelkarde zwischen 0.10 bis 0.30 mm für Baumwolle oder bis 0.40 mm für Chemiefasern. Daher ist die präzise Führung der Wanderdeckel durch die Flexibelbogen von zentraler Bedeutung. Der Kardierspalt muss auch über die gesamte Arbeitsbreite einer Karde von gleichmässiger Grösse sein, um eine gute Kardierleistung zu erreichen. Dies stellt hohe Anforderungen an die Linearität und die Formstabilität der Wanderdeckel.

Die Wanderdeckei liegen beidseits der Karde mit den Kopfendstücken auf dem Flexibelbogen auf. Um eine exakte Führung dieser Kopfendstücke auf der Oberfläche der Flexibelbogen zu ermöglichen ist die, dem Flexibelbogen zugewandte, Lauffläche der Kopfendstücke in ihrer Form dem Radius der Führungsfläche der Flexibelbogen angeglichen. Über eine längere Betriebszeit sind die Laufflächen der Kopfendstücken einem Verschleiss unterworfen. Dies wird durch ein periodisches Nacharbelten der Laufflächen behoben. Aus dem Stand der Technik sind auch Wanderdeckel bekannt, welche Kopfendstücken mit austauschbaren Gleitelemente, sogenannten Gleitschuhen, aufweisen. Bei einem Wechsel dieser Gleitelemente ist es jedoch ebenfalls notwendig deren Laufflächen in ihrer Form dem Flexibelbogen anzupassen.

Aus dem Stand der Technik ist es bekannt die Laufflächen der Kopfendstücke mit einem zylindrischen Fräser, welcher quer zur Längsachse der Wanderdeckel bewegt wird, zu bearbeiten. Die DE 634 651 zeigt eine Vorrichtung zum Schleifen der Auflageflächen an den Enden von Kopfendstücken mit einer Schleifscheibe. Bei beiden Verfahren führt die Bearbeitung der Laufflächen der Kopfendstücke zu einer ebenen Form der Laufflächen. Die durch die Bearbeitung geschaffene ebene Lauffläche ist dabei parallel zur Ebene der Garniturenauflagefläche, Nachteilig ist, dass im Betrieb der Wanderdeckel mit einer ebenen Lauffläche über einen Flexibelbogen geführt werden muss, welcher einen Radius aufweist. Dadurch ergibt sich eine linienförmige Auflage des Wanderdeckels auf dem Flexibelbogen, was zu einer ungenauen Führung des Wanderdeckels und zu einem erhöhten Verschleiss der Laufflächen des Wanderdeckels führt.

Weiter offenbart die CN 211 92 85 U ein Vorrichtung zum Bearbeiten der Laufflächen der Kopfendstücken mit einem zylindrischen Fräser welcher mit seiner Achse parallel zur Längsachse des Wanderdeckels angeordnet ist. Der in der Vorrichtung eingespannte Wanderdeckel wird dabei in Achsrichtung linear über die Fräser hinwegbewegt und zusätzlich um eine parallel zur Längsachse des Wanderdeckels angeordnete Achse der Einspannvorrichtung geschwenkt. Nachteilig ist, dass die Geometrie der Laufflächen der Kopfendstücken nicht nur durch den Durchmesser des Fräsers sondern zusätzlich durch den Abstand der Drehachse des Fräsers zu der Schwenkachse des Wanderdeckels bestimmt werden muss. Dabei Ist die Dimensionierung des Fräsers zusätzlich durch die Positionierung des eingespannten Wanderdeckels beeinflusst.

Eine Vorrichtung zur Prüfung der Ebenheit eines Wanderdeckels offenbart die DE 42 43 807. Der Deckelstab wird dazu mit den Laufflächen auf Lagerböcken aufgelegt und auf seiner Länge an mehreren Messstellen ausgemessen. Die Messwerte werden durch einen Rechner ausgewertet und dadurch die Ebenheit des Wanderdeckels bestimmt. Aufgrund der Auswertung kann Über die weitere Verwendung des Wanderdeckels entschieden werden.

Die Aufgabe der Erfindung ist es, eine Vorrichtung schaffen, welche eine exakte Formgebung der Laufflächen der Wanderdeckel ermöglicht. Eine weitere Aufgabe der Erfindung ist es die Vorrichtung derart zu gestalten, dass ein Umspannen der Wanderdeckel zur Bestimmung der Ebenheit der Wanderdeckel unnötig wird.

Die Aufgabe wird gelöst durch die Merkmale im kennzeichnenden Teil der unabhängigen Ansprüche. Zur Lösung der Aufgabe wird eine neuartige Vorrichtung zur Bearbeitung von Laufflächen an Kopfendstücken von Wanderdeckeln vorgeschlagen mit einem Grundrahmen mit einer Längsachse und mit Spannmitteln zur Befestigung des Wanderdeckels an mindestens zwei auf der Längsachse verteilten Stellen. Die Vorrichtung umfasst zwei spanabhebende Bearbeitungsmittel, welche in Richtung der Längsachse gesehen ausserhalb der Spannmittel angeordnet sind. Zur Aufnahme der Spannmittel in der Vorrichtung ist eine Gleitführung vorgesehen.

Der zu bearbeitende Wanderdeckel wird in die Vorrichtung eingespannt. Dazu sind mindestens zwei Spannmittel in der Vorrichtung vorgesehen. Die Spannmittel sind in der Vorrichtung in einer Gleitführung gehalten. Die Distanz zwischen den Spannmitteln ist für Wanderdeckel mit einer Länge von 60 Zoll vorgesehen. Es können jedoch durch einfache Anpassungen auch andere Längen von Wanderdeckeln bearbeitet werden, beispielsweise Wanderdeckel mit einer Länge von 40 Zoll. Die Vorrichtung weist dazu einen Grundrahmen auf, an welchem die Gleitführung befestigt ist. Die Spannmittel sind in der Gleitführung derart gehalten, dass sie in einer Achse, der Längsachse der Vorrichtung bewegt werden können. Ist der Wanderdeckel in den Spannmitteln befestigt, ist damit auch der Wanderdeckel zusammen mit den Spannmitteln entlang der Gleitführung in Richtung der Längsachse der Vorrichtung beweglich. Die Bewegung der Wanderdeckel respektive der Spannmittel in den Gleitführungen kann manuell erfolgen oder mit Hilfe eines Antriebs unterstützt werden.

Ausserhalb der Spannmittel, in Richtung der Längsachse der Vorrichtung gesehen, sind auf dem Grundrahmen der Vorrichtung zwei spanabhebende Bearbeitungsmittel vorgesehen. Jeweils ein Bearbeitungsmittel ist auf jeder Seite der Vorrichtung angeordnet. Als Bearbeitungsmittel werden Formfräser für die Bearbeitung der Laufflächen der Wanderdeckel benutzt. Diese Formfräser sind derart geformt, dass sie in ihrer Geometrie einem bombierten Zylinder entsprechen. Die Fräser sind mit ihrer Achse orthogonal zur Längsachse der Vorrichtung und damit auch orthogonal zur Längenausdehnung des Wanderdeckels angeordnet. Die Bombierung oder Konvexität des Formfräsers entspricht dem Radius des in der Karde eingesetzten Flexibelbogens. Wird der Wanderdeckel durch seine Bewegung in den Gleitführungen über den Formfräser hinwegbewegt, erhalten die Laufflächen eine geometrische Form welche der Ausbildung der Oberfläche des Flexibelbogens entspricht.

Bevorzugterweise sind die Bearbeitungsmittel ortsfest in der Vorrichtung gehalten. Dadurch können die Antriebe der Bearbeitungsmittel ebenfalls ortsfest am Grundrahmen der Vorrichtung befestigt sein. Als Antrieb sind Elektromotoren wie pneumatische oder hydraulische Antriebe geeignet. Die Art des Antriebs ist dabei auf das verwendete Bearbeitungsmittel abzustimmen.

Die Spannmittel weisen bevorzugterweise eine höhenverstellbare Aufnahme für die Wanderdeckel auf und sind auf der Gleitführung verschiebbar gehalten. Die Aufnahme für die Wanderdeckel ist in ihrer Form auf die Geometrie und Abmessungen der Wanderdeckel abgestimmt. Die Einspannung der Wanderdeckel ist durch manuelles Festziehen einer Klemmvorrichtung möglich, kann jedoch auch durch pneumatische oder elektrische Elemente bewirkt werden. Es sind auch andere aus dem Stand der Technik bekannte Spannelemente zur Einspannung der Wanderdeckel einsetzbar, wie beispielsweise pneumatische Klemmvorrichtungen oder selbstklemmende Kniehebelverschlüsse. Die Höhenverstellbarkeit der Aufnahme für den Wanderdeckel dient der Festlegung der Bearbeitungstiefe durch die Bearbeitungsmittel. Es wird dadurch sichergestellt, dass Wanderdeckel für verschiene Deckelsätze an unterschiedlich eingestellten Flexibelbogen bearbeitet werden können. Vorteilhafterweise ist die Höhenverstellung mit einer Skala versehen, welche eine exakte Einstellung beider Spannmittel auf die gewünschte Höhe ermöglicht. Durch ein einfaches Austauschen der Spannmittel können verschiedenste Ausführungen von Wanderdeckeln in der Vorrichtung eingespannt werden.

Die Spannmittel sind in der Gleitführung derart gehalten, dass nur eine Bewegung in der Längsrichtung der Vorrichtung möglich ist. In andere Richtungen als der Längsrichtung ist eine möglichst geringe Bewegung zuzulassen. Die Gleitführung kann als eine oder mehrere Schienen ausgeführt werden, welche sich in Richtung der Längsachse der Vorrichtung erstrecken. Die Schienen sind in ihrer Geometrie nach bekannter Art zu gestalten, sodass bei Einfügen der Spannmittel in die Schienen nur eine Bewegung der Spannmittel entlang der Schienen möglich ist. In einer bevorzugten Ausführung sind die Spannmittel mit Feststellvorrichtungen versehen, beispielsweise in Form von Feststellschrauben oder Federelementen, welche ein- und ausrastbar sind. Mit den Feststellvorrichtungen können die Spannmittel auf den Gleitführungen in einer Position festgehalten werden um die Befestigung des Wanderdeckels zu vereinfachen.

Vorteilhafterweise ist die Gleitführung beidseitig mit einstellbaren Anschlagpunkten versehen. Die Anordnung der Anschlagpunkte ist bevorzugterweise auf die Länge der Wanderdeckel ausgelegt. Die Anschlagpunkte dienen dazu die Bewegung des Wanderdeckels entlang der Gleitführung zu begrenzen. Dadurch wird verhindert, dass der Wanderdeckel weiter als mit der zu bearbeitenden Lauffläche über das Bearbeitungsmittel hinwegbewegt wird.

Zur Prüfung der Wanderdeckel auf ihre weitere Verwendbarkeit ist die Vorrichtung mit einem Messmittel versehen. Dazu weist die Vorrichtung einen Messwagen auf, welcher auf der Gleitführung verschiebbar befestigt ist und Messmittel zur Bestimmung der Linearität des Wanderdeckels aufweist. Der Messwagen kann auch auf einer eigens dafür vorgesehenen Gleitführung in Form einer zusätzlichen Schiene an der Vorrichtung angebracht sein. Vorteilhafterweise ist die Gleitführung derart ausgelegt, dass die Spannmittel für den Wanderdeckel und der Messwagen unabhängig voneinander darauf bewegt werden können. Das Messmittel wird manuell oder motorisch entlang dem Wanderdeckel bewegt und ermöglicht dadurch die Bestimmung der Linearität respektive Konvexität des Wanderdeckels. Dies geschieht in der Regel durch die Bestimmung des sich über die Länge des Wanderdeckels verändernden Abstandes zwischen dem Messmittel und einer bestimmten Fläche des Wanderdeckels. Als Messfläche am Wanderdeckel ist bevorzugterweise die Garniturauflagefläche vorzusehen, da die Garniturauflagefläche im Wesentlichen nach Montieren der Garnitur den Kardierspalt bestimmt. In einer bevorzugten Ausführung beinhalten die Messmittel eine Messuhr beinhalten zur mechanischen oder digitalen Messung der Linearität entlang der Längsachse des Wanderdeckels. Die Messmittel können jedoch auch als elektronische Abstandmessung, beispielsweise mittels einem Laser ausgeführt sein. Die Bestimmung der Linearität des Wanderdeckels erfolgt bei einer Messuhr durch die Beobachtung des Bedienpersonals sowie in einer einfachen Ausführung mit Hilfe eines Schleppzeigers in der Messuhr. Es kann jedoch auch eine elektronische Auswertung der Messung erfolgen.

Im Verfahren zur Bearbeitung von Laufflächen an Kopfendstücken von Wanderdeckeln auf einer Vorrichtung mit einem Grundrahmen mit einer Längsachse und mit Spannmitteln zur Befestigung des Wanderdeckels an mindestens zwei auf der Längsachse verteilten Stellen, wird der Wanderdeckel in den Spannmitteln eingespannt. Die Spannmittel werden in der Vorrichtung auf einer Gleitführung in der Längsachse verschieblich gehalten. Der Wanderdeckel wird anschliessend, zusammen mit den Spannmitteln, zur Bearbeitung der Laufflächen in einen Wirkungsbereich von ausserhalb der Spannmittel angeordneten Bearbeitungsmitteln verschoben.

Die Bearbeitungsmittel werden als ortsfest in der Vorrichtung gehaltene Formfräser, welche in ihrer Geometrie einem bombierten Zylinder entsprechen und mit ihrer Achse orthogonal zur Längsachse der Vorrichtung und damit auch orthogonal zu einer Längenausdehnung des Wanderdeckels angeordnet werden, ausgebildet.

Zur Prüfung der Linearität des Wanderdeckels werden die Spannmittel in einer bestimmten Position festgestellt und ein an der Gleitführung angebrachter Messwagen wird zur Bestimmung der Linearität des Wanderdeckels entlang der Längsachse der Vorrichtung bewegt.

Im Folgenden wird die Erfindung anhand von einer beispielhaften Ausführungsform erklärt und durch Zeichnungen näher erläutert.
- Figur 1: Schematische Darstellung der Vorrichtung zur Bearbeitung von Wanderdeckeln in einer Draufsicht
- Figur 2: Vereinfachte schematische Darstellung einer Ausführung des Bearbeitungsmittels in einer Ansicht A nach der Figur 1

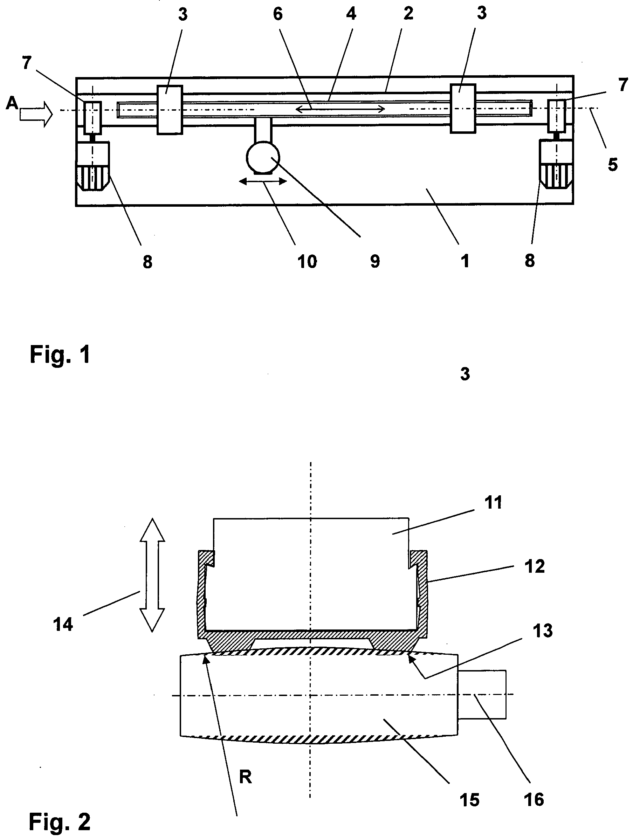

Figur 1 zeigt in schematischer Darstellung eine Draufsicht der Vorrichtung zur Bearbeitung von Wanderdeckeln. Auf einem Grundrahmen 1 ist eine Gleitführung 2 angebracht. Die Gleitführung 2 erstreckt sich über die Längsachse 5 der Vorrichtung resp. des Grundrahmens 1. Von der Gleitführung 2 gehalten werden zwei Spannmittel 3. Die Spannmittel 3 sind auf der Gleitführung 2 verschieblich angeordnet, sodass sie in Richtung der Längsachse 5 bewegt werden können. In die Spannmittel 3 aufgenommen und festgehalten wird ein Wanderdeckel 4. Die Spannmittel 3 sind dazu mit einer Aufnahme und einem Spannelement versehen. Die Aufnahme ist in ihrer geometrischen Form und Abmessungen auf den zu bearbeitenden Wanderdeckel 4 abgestimmt. Dies ermöglicht durch einen einfachen Austausch der Spannmittel 3 verschiedene Bauarten oder Längen von Wanderdeckeln 4 auf derselben Vorrichtung zu bearbeiten. Als Spannelement sind aus dem Stand der Technik bekannte Ausführungen verschiedenster Art einsetzbar.

Der eingespannte Wanderdeckel 4 kann mit den Spannmitteln 3 entlang der Längsachse 5 hin und her bewegt werden, wie mit dem Pfeil 6 gezeigt. Ausserhalb der Spannmittel 3, in Richtung der Längsachse 5 betrachtet, sind zwei Bearbeitungsmittel 7 angeordnet. Die Bearbeitungsmittel 7 sind ortsfest auf dem Grundrahmen 1 der Vorrichtung befestigt. Die Bearbeitungsmittel 7 sind jeweils mit einem Antrieb 8 versehen. Gezeigt ist in Figur 1 ein elektromotorischer Antrieb 8 der Bearbeitungsmittel 7, es können jedoch auch andere Antriebsformen wie beispielsweise ein pneumatischer Antrieb eingesetzt werden.

Wiederum zwischen den Bearbeitungsmitteln 7 ist an der Gleitführung 2 ein Messwagen 9 angeordnet. Der Messwagen 9 ist in beiden Richtungen 10 entlang der Gleitführung 2 frei beweglich. Der Messwagen 9 umfasst ein Messmittel, welches zur Messung der Linearität des Wanderdeckels 4 dient. Der Messwagen 9 wird entlang dem stillstehenden Wanderdeckel geführt. Dadurch kann über die Länge des Wanderdeckels 4 festgestellt werden ob dessen Linearität noch in einem für einen weiteren Einsatz des Wanderdeckels 4 festgelegten Toleranzfeld liegt.

Figur 2 zeigt eine vereinfachte schematische Darstellung einer Ausführung des Bearbeitungsmittels 7 in einer Ansicht A nach der Figur 1. In der gezeigten Ausführung wird als Bearbeitungsmittel 7 ein Formfräser 15 verwendet. Auf die Darstellung des Antriebes wurde verzichtet. Die Aussenkontur des Formfräsers 15 zeigt eine bombierte Form mit einer Konvexität von einem Radius R. Der Radius R entspricht dabei dem Radius welchen die Oberfläche des Flexibelbogens aufweist über die der Wanderdeckel respektive seine Lauffläche 13 im Einsatz geführt wird.

Oberhalb des Formfräsers 15 ist das Kopfendstück 11 eines Wanderdeckels dargestellt. In der gezeigten Ausführung ist das Kopfendstück 11 beispielhaft mit einem sogenannten Gleitschuh 12 bestückt. Der Gleitschuh 12 weist die Laufflächen 13 auf, auf welchen der Wanderdeckel bei seinem Einsatz auf dem Flexibelbogen geführt wird. Der Abstand zwischen dem Wanderdeckel respektive dem Kopfendstück 11 des Wanderdeckels und der Achse 16 des Formfräsers 15 wird mit Hilfe der höhenverstellbaren Aufnahme des Spannmittels eingestellt. Die Höhenverstellung ist mit dem Pfeil 14 gezeigt. Wird nun der Wanderdeckel mit dem Kopfendstück 11 und dem daran befestigten Gleitschuh 12 über den Formfräser 15 hinweg auf den Betrachter zu bewegt, erfolgt eine Bearbeitung der Laufflächen 13.

### Legende

- 1: Grundrahmen
- 2: Gleitführung
- 3: Spannmittel
- 4: Wanderdeckel
- 5: Längsachse
- 6: Bewegung Wanderdeckel
- 7: Bearbeitungsmittel
- 8: Antrieb
- 9: Messwagen
- 10: Bewegung Messwagen
- 11: Kopfendstück
- 12: Gleitschuh
- 13: Lauffläche
- 14: Höhenverstellung
- 15: Formfräser
- 16: Achse des Formfräsers
- R: Radius Formfräser

## Patentansprüche

1. Vorrichtung zur Bearbeitung von Laufflächen (13) an Kopfendstücken (11) von Wanderdeckeln (4) mit einem Grundrahmen (1) mit einer Längsachse (5) und mit Spannmitteln (3) zur Befestigung des Wanderdeckels (4) an mindestens zwei auf der Längsachse (5) verteilten Stellen, wobei zwei spanabhebende Bearbeitungsmittel (7) vorgesehen sind, welche in Richtung der Längsachse (5) gesehen ausserhalb der Spannmittel (3) angeordnet sind und wobei zur Aufnahme der Spannmittel (3) in der Vorrichtung eine Gleitführung (2) vorgesehen ist, wobei die Bearbeitungsmittel (7) Fräser sind, **dadurch gekennzeichnet, dass** die Fräser als Formfräser (15) ausgebildet und mit ihrer Achse (16) orthogonal zur Längsachse (5) der Vorrichtung und damit auch orthogonal zu einer Längenausdehnung des Wanderdeckels (4) angeordnet sind, wobei die Formfräser (15) derart geformt sind, dass sie in ihrer Geometrie einem bombierten Zylinder entsprechen.

2. Vorrichtung nach Anspruch 1, **dadurch gekennzeichnet, dass** die Bearbeitungsmittel (7) ortsfest in der Vorrichtung gehalten sind.

3. Vorrichtung nach mindestens einem der vorangehenden Ansprüche, **dadurch gekennzeichnet, dass** die Spannmittel (3) eine höhenverstellbare Aufnahme für den Wanderdeckel (4) aufweisen und in der Gleitführung (2) verschiebbar gehalten sind.

4. Vorrichtung nach mindestens einem der vorangehenden Ansprüche, **dadurch gekennzeichnet, dass** die Gleitführung (2) beldseitig mit auf die Länge der Wanderdeckel (4) ausgelegten Anschlagpunkten versehen ist.

5. Vorrichtung nach mindestens einem der vorangehenden Ansprüche, **dadurch gekennzeichnet, dass** die Vorrichtung einen Messwagen (9) aufweist, welcher auf der Gleitführung (2) verschiebbar befestigt ist und Messmittel zur Bestimmung der Linearität des Wanderdeckels (4) aufweist.

6. Vorrichtung nach Anspruch 5, **dadurch gekennzeichnet, dass** die Messmittel eine Messuhr beinhalten zur mechanischen oder digitalen Messung der Linearität entlang der Längsachse des Wanderdeckels.

7. Verfahren zur Bearbeitung von Laufflächen (13) an Kopfendstücke (11) von Wanderdeckein (4) auf einer Vorrichtung mit einem Grundrahmen (1) mit einer Längsachse (5) und mit Spannmitteln (3) zur Befestigung des Wanderdeckels (4) an mindestens zwei auf der Längsachse (5) verteilten Stellen, wobei der Wanderdeckel (4) in den Spannmitteln (3) eingespannt wird, wobei die Spannmittel (3) in der Vorrichtung auf einer Gleitführung (2) in der Längsachse (5) verschieblich gehalten werden und der Wanderdeckel (4) zur Bearbeitung der Laufflächen (13) in einen Wirkungsbereich von ausserhalb der Spannmittel (3) angeordneten Bearbeitungsmitteln (7) verschoben wird, dadurch gekennzelchnet, dass als Bearbeitungsmittel (7) ortsfest in der Vorrichtung gehaltene Formfräser (15) eingesetzt werden, welche in ihrer Geometrie einem bomblerten Zylinder entsprechen und mit ihrer Achse (16) orthogonal zur Längsachse (5) der Vorrichtung und damit auch orthogonal zu einer Längenausdehnung des Wanderdeckels (4) angeordnet werden.

8. Verfahren nach Anspruch 7, **dadurch gekennzeichnet, dass** ein an der Gleitführung (2) angebrachter Messwagen (9) zur Bestimmung der Linearität des Wanderdeckels (4) entlang der Längsachse (5) bewegt wird.

## Claims

1. A device for machining running surfaces (13) on head end pieces (11) of revolving flats (4) having a base frame (1) with a longitudinal axis (5) and with clamping means (3) for fixing the revolving flat (4) at at least two points distributed on the longitudinal axis (5), wherein two chip-removal machining means (7) which are arranged outside the clamping means (3) viewed in the direction of the longitudinal axis (5) are provided and wherein a sliding guide (2) is provided for accommodating the clamping means (3) in the device, wherein the machining means (7) are milling cutters, **characterized in that** the milling cutters are in the form of form cutters (15) and the form cutters (15) are arranged with their axis (16) perpendicular to the longitudinal axis (5) of the device and therefore also perpendicular to the longitudinal extension of the revolving flat (4), wherein the form cutters (15) are shaped in such a way that their geometry corresponds to a curved cylinder.

2. The device as claimed in claim 1, **characterized in that** the machining means (7) are retained in the device in a stationary manner.

3. The device as claimed in at least one of the preceding claims, **characterized in that** the clamping means (3) have a height-adjustable mounting for the revolving flat (4) and are movably retained in the sliding guide (2).

4. The device as claimed in at least one of the preceding claims, **characterized in that** the sliding guide (2) is provided with stop points on both sides which are designed for the length of the revolving flat (4).

5. The device as claimed in at least one of the preceding claims, **characterized in that** the device has a measuring carriage (9) which is movably attached to the sliding guide (2) and has measuring means for determining the linearity of the revolving flat (4).

6. The device as claimed in claim 5, **characterized in that** the measuring means include a dial gauge for mechanical or digital measurement of the linearity along the longitudinal axis of the revolving flat.

7. A method for machining running surfaces (13) on the head end pieces (11) of revolving flats (4) with a device having a base frame (1) with a longitudinal axis (5) and with clamping means (3) for fixing the revolving flat (4) at at least two points distributed on the longitudinal axis (5), wherein the revolving flat (4) is clamped in the clamping means (3), wherein the clamping means (3) are retained in the device on sliding guides (2) so that they can be moved in the longitudinal axis (5) and the revolving flat (4) is moved into a working range for machining the running surfaces (13) by machining means (7) arranged outside the clamping means (3), **characterized in that** form cutters (15) that are retained in the device in a stationary manner are used as machining means (7), whereas the form cutters (15) are shaped in such a way that their geometry corresponds to a curved cylinder and are arranged with their axis (16) perpendicular to the longitudinal axis (5) of the device and therefore also perpendicular to the longitudinal extension of the revolving flat (4).

8. The method as claimed in claim 8, **characterized in that** a measuring carriage (9) attached to the sliding guide (2) is moved along the longitudinal axis (5) in order to determine the linearity of the revolving flat (4).

## Revendications

1. Dispositif d'usinage de surfaces de roulement (13) au niveau d'embouts de tête (11) de chapeaux baladeurs (4), comprenant un cadre de base (1) pourvu d'un axe longitudinal (5) et des moyens de serrage (3) destinés à fixer le chapeau baladeur (4) à au moins deux emplacements répartis sur l'axe longitudinal (5), deux moyens d'usinage par enlèvement de copeaux (7) étant prévus qui sont disposés à l'extérieur des moyens de serrage (3) par référence à la direction de l'axe longitudinal (5) et un guide coulissant (2) étant prévu dans le dispositif pour recevoir les moyens de serrage (3), les moyens d'usinage (7) étant des fraiseuses, **caractérisé en ce que** les fraiseuses sont conformées en fraiseuses à profiler (15) et sont disposées de façon à ce que leur axe (16) soit orthogonal à l'axe longitudinal (5) du dispositif et donc également orthogonal à l'extension longitudinale du chapeau baladeur (4), les fraiseuses à profiler (15) étant conformés de manière à correspondre géométriquement à un cylindre bombé.

2. Dispositif selon la revendication 1, **caractérisé en ce que** les moyens de traitement (7) sont maintenus fixes dans le dispositif.

3. Dispositif selon au moins une des revendications précédentes, **caractérisé en ce que** les moyens de serrage (3) comportent un logement, réglable en hauteur, qui est destiné au chapeau baladeur (4) et sont supportés de façon coulissante dans le guide coulissant (2).

4. Dispositif selon au moins une des revendications précédentes, **caractérisé en ce que** le guide coulissant (2) est pourvu des deux côtés de points de butée dimensionnés à la longueur des chapeaux baladeurs (4).

5. Dispositif selon au moins une des revendications précédentes, **caractérisé en ce que** le dispositif comprend un chariot de mesure (9) qui est fixé de façon coulissante sur le guide coulissant (2) qui comporte des moyens de mesure destinés à déterminer la linéarité du chapeau baladeur (4).

6. Dispositif selon la revendication 5, **caractérisé en ce que** les moyens de mesure contiennent un comparateur de mesure destiné à la mesure mécanique ou numérique de la linéarité le long de l'axe longitudinal du chapeau baladeur.

7. Procédé d'usinage de surfaces de roulement (13) au niveau d'embouts de tête (11) de chapeaux baladeurs (4) sur un dispositif comprenant un cadre de base (1) pourvu d'un axe longitudinal (5) et des moyens de serrage (3) destinés à fixer le chapeau baladeur (4) à au moins deux emplacements répartis sur l'axe longitudinal (5), le chapeau baladeur (4) étant serré dans les moyens de serrage (3), les moyens de serrage (3) étant maintenus mobiles selon l'axe longitudinal (5) sur un guide coulissant (2) dans le dispositif, et le chapeau baladeur (4) étant déplacé jusque dans une zone d'action par des moyens d'usinage (7), disposés à l'extérieur des moyens de serrage (3), pour usiner les surfaces de roulement (13), **caractérisé en ce que** des fraiseuses à profiler (15), montées de façon fixe dans le dispositif, sont utilisées comme moyens d'usinage (7), lesquelles fraiseuses correspondent géométriquement à un cylindre bombé et sont disposées de façon à ce que leur axe (16) soit orthogonal à l'axe longitudinal (5) du dispositif et donc également orthogonal à l'extension longitudinale du chapeau baladeur (4).

8. Procédé selon la revendication 7, **caractérisé en ce qu'**un chariot de mesure (9) monté sur le guide coulissant (2), est déplacé le long de l'axe longitudinal (5) pour déterminer la linéarité du chapeau baladeur (4).
